Europäisches Patentamt

European Patent Office

Office européen des brevets

(19)

(11) **EP 0 986 278 A1**

(12) **EUROPEAN PATENT APPLICATION**

(43) Date of publication:
**15.03.2000 Bulletin 2000/11**

(51) Int Cl.7: **H04Q 7/38**, H04Q 7/22

(21) Application number: **98307489.9**

(22) Date of filing: **15.09.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Davies, Gareth**
  **Chippenham, Wilts. SN15 1NP (GB)**

• **Flewitt, Andrian Robert**
  **Lechlade, Gloucestershire GL7 3SB (GB)**
• **Gunreben, Peter**
  **91088 Bubenreuth (DE)**
• **Herpers, Martine**
  **91056 Erlangen (DE)**
• **Pampel, Holger**
  **90542 Eckental (DE)**

(74) Representative: **Funnell, Samantha Jane et al**
  **Lucent Technologies UK Limited,**
  **5 Mornington Road**
  **Woodford Green, Essex IG8 0TU (GB)**

(54) **Cellular radio network and method for increasing capacity**

(57)     The present invention relates generally to the field of cellular radio networks and a method for increasing capacity of the cellular radio networks, particularly a cellular radio network and a method for increasing capacity by use of concentric zones and an optimised handover algorithm which executes a handover from an outer zone to a more inner zone based on a carrier to interference criterion, whilst a handover from an inner zone to a more outer zone is based on a quality criterion for an active call.

**Fig. 1**

EP 0 986 278 A1

**Description**

**TECHNICAL FIELD**

The present invention relates generally to the field of cellular radio networks and a method for increasing capacity of the cellular radio networks, particularly a cellular radio network and a method for increasing capacity by use of concentric zones.

**BACKGROUND OF THE INVENTION**

The basic idea underlying cellular radio networks is to use within a limited band width only a given number of frequencies for setting up radio channels. The given frequencies are used several times to provide the traffic capacity required despite the limited bandwidth. For this purpose every cell of the cellular radio network uses only one frequency or a subset of frequencies from within the available bandwidth. Neighbouring cells do have different frequencies or subsets of frequencies. Cells using the same frequency or subset of frequencies are located sufficiently far from each other. In that way signal strengths of the different radio channels represented by the different frequencies have decreased sufficiently in order to avoid disturbances caused from co-channel interference. The principle of distributing frequencies is generally referred to as frequency reuse.

In order to achieve seamless coverage and to support the traffic capacity required, a number of system parameters for the design of the cellular radio network has to be considered, e. g. traffic intensity in different areas, maximum transmission power and interference.

When the design of a cellular radio network is completed, a dedicated group of frequencies is allocated to each cell, i. e. a number of carriers having the given frequencies. The reuse factor then indicates how far equal frequencies are separated. Even though all frequencies have been allocated during the design not necessarily all frequencies or carriers are used in each cell. Therefore, if the capacity of a cell has to be increased it can be increased by using more carriers from the allocated frequencies. If once all allocated frequencies are used no additional network capacity is achievable by cellular radio networks as described above.

From the article "CAPACITY ALLOCATION AND CHANNEL ASSIGNMENT IN CELLULAR RADIO SYSTEMS USING REUSE PARTITIONING", by J. Zander and M. Frodigh, ELECTRONICS LETTERS 27th February 1992, Vol. 28, No. 5, pages 438-440, a method for increasing the capacity of a cellular radio network is known.

The consideration behind the known method is that conventional cellular radio network designs aim at achieving at least some minimum Carrier-to-Interference level (C/I) in all locations of each entire cell. The result is that mobile stations close to the perimeter of a cell just barely achieve the minimum C/I level, whereas mobiles close to the respective base station, and thus the centre of the respective cell, experience a substantially higher signal quality. In these positions mobile stations would be able to tolerate a higher interference level and thus a tighter reuse of frequencies or channels would be possible. Therefore cells are divided into concentric zones each having a different reuse factor and a different maximum transmission power. Inner zones usually have a lower used maximum transmission power and a tighter reuse factor than more outer zones. If a mobile station is active, i. e. calling, the mobile station or the call is handed over to a more inner zone of a cell in case a sufficient C/I level for the carrier having the allocated frequency of that zone can be detected. If the C/I level is deteriorating during the mobile station is still active the call is handed back again to more outer zones of the cell depending on a sufficient C/I level for the respective outer zone.

It has been found that a handover algorithm for a cellular radio network based on the evaluation of C/I levels alone does not lead to satisfactory handovers for calls being handed over in cells of the cellular radio network which are divided into concentric zones. Handover algorithms being based on C/I levels only tend to short usage times of more inner zones and high calculation effort for the necessary frequent handovers caused by the short time use of the inner zones.

**SUMMARY OF THE INVENTION**

Accordingly, it is an object of the present invention to provide a method for increasing the capacity of cellular radio networks, particularly a method for increasing the capacity of cellular radio networks by use of concentric zones. It is the aim of the inventive method under consideration to avoid the drawbacks known from the state of the art.

The object is achieved by providing a method for increasing the capacity of a cellular radio network with cells being partitioned in zones having at least one frequency or carrier allocated to each zone, by a inter-zone handover for handing over a call whereat

said inter-zone handover from an outer zone to a more inner zone is executed after a carrier to interference criterion for at least one of the carriers of said more inner zone is fulfilled, and

said inter-zone handover from an inner zone to a more outer zone is executed after a quality criterion for the call is no longer fulfilled.

It is an other object of the present invention to provide a cellular radio network, particularly a cellular radio network with increased capacity by use of concentric zones. It is the aim of the inventive cellular radio network under consideration to avoid the drawbacks known from the state of the art.

The object is achieved by providing a cellular radio network having increased capacity with cells being partitioned in zones having at least one frequency or carrier allocated to each zone, with

means for executing an inter-zone handover algorithm, whereat

said means for executing said inter-zone handover algorithm executes said inter-zone handover from an outer zone to a more inner zone after measuring a sufficiently good carrier to interference ratio for at least one of the carriers of said more inner zone, and

said means for executing said inter-zone handover algorithm executes said inter-zone handover from an inner zone to a more outer zone after a quality measurement for an active call shows an insufficient result.

It is an advantage of the present invention, that it allows to increase the capacity of cellular radio networks by use of concentric zones having an improved handover algorithm, which supports the use of inner zones and avoids unnecessary handovers.

The present invention will become more fully understood from the detailed description given hereinafter and further scope of applicability of the present invention will become apparent. However, it should be understood that the detailed description is given by way of illustration only, since various changes and modifications within the spirit and scope of the invention will become apparent to those skilled in the art.

**BRIEF DESCRIPTION OF THE DRAWINGS**

The following detailed description is accompanied by drawings of which

Fig. 1    is an illustration of a cellular radio network having concentric zones according to this invention,

Fig. 2    is a more detailed illustration of one cell as used in the cellular radio network as shown in Fig. 1,

Fig. 3    is an illustration of handovers executed for a moving mobile station according to this invention, and

Fig. 4    represents a schematic diagram of a cellular radio network according to this invention.

Identical denotations in different Figures represent identical elements.

**DETAILED DESCRIPTION**

Although the present invention is suited for all kinds of cellular radio networks employing mobile assisted cellular handover, it will be explained in the following by using a cellular radio network based on the Global System for Mobile communications (GSM) as an example. For greater detail of the GSM standard reference is made to "The GSM system for Mobile Communications", M. Mouly and M.-B. Pautet, Palaiseau, France, 1992, ISBN No. 2-9507190-0-7.

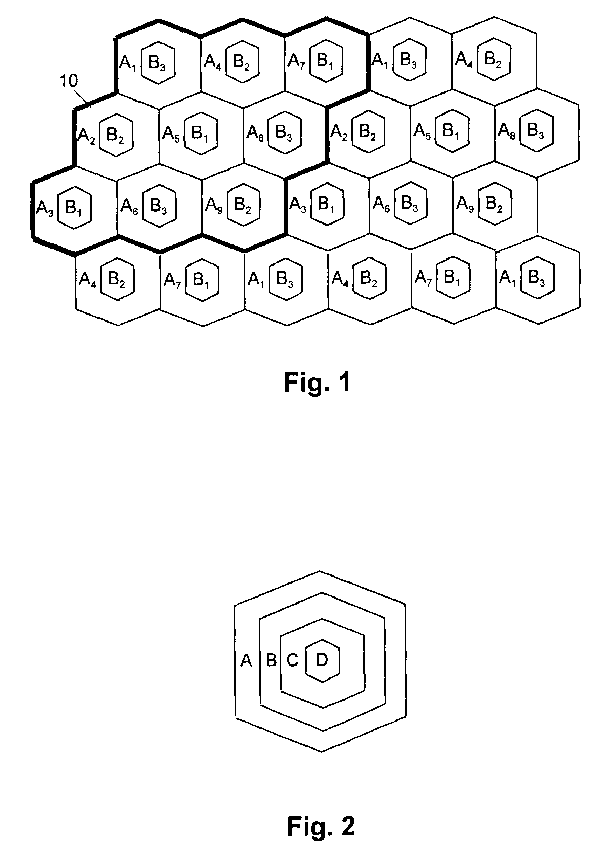

Depicted in Fig. 1 is a general cell structure of a cellular radio network. The cellular radio network is realised with cells being arranged at a reuse pattern or cluster 10 having as an example nine cells $A_1$ to $A_9$. Each of the cells $A_1$ to $A_9$ has a carrier or a subset of carriers at mutually different frequencies or at mutually different subsets of frequencies all lying within an available bandwidth. To provide seamless coverage of an area covered by the cells the maximum transmission power of transceivers (TRX) being part of Base Transceiver Stations (BTS) which are positioned at the centres of the cells is chosen in a way to achieve a given carrier to interference (C/I) level at the border of each cell. This is achieved by assigning frequencies with an adequate reuse.

As shown in Fig. 1 all cells are divided into zones, having an inner zone B and outer zone A. It is also possible, e. g. in cells having only a low traffic requirement, that these cells are not divided into different zones and thus only having zones A. In the example shown in Fig. 1 the inner zones B are realised by three different zones $B_1$ to $B_3$. Each of the zones $B_1$ to $B_3$ has a carrier or a subset of carriers at mutually different frequencies or at mutually different subsets of frequencies all lying within the available bandwidth. The used maximum transmission power of TRXs serving the zones B is usually lower than the used maximum transmission power of TRXs serving the cells A. In that way it is possible to reuse the frequencies or subsets of frequencies of zones $B_1$ to $B_3$ more frequently, because the covered areas are smaller.

Depicted in Fig. 2 is one cell as shown in Fig. 1. The cell, having an outer zone A which covers the whole cell, is divided into three additional zones B, C and D, additional zones are possible. As explained above, the used maximum transmission power of zones being oriented more towards the centre of the cell and covering a smaller area is lower than the used maximum transmission power of zones covering a greater area. The used maximum transmission power therefore has the highest value for zone A, as zone A covers the whole cell, and the lowest value for zone D, which covers an small area close to the BTS or TRX only. Depart from that, it is possible that more inner zones use a higher transmission power, than is actually used in zone A, if the frequency used for this inner zones are not reused in neighbouring zones, thus not causing interference. The transmission power of all zones should not exceed the allowable maximum transmission power of zone A. For simplicity, following for referencing the cells, as shown in Fig. 1, the same denotations will be used for the cells as for largest zone within the cells, i. e. zone A.

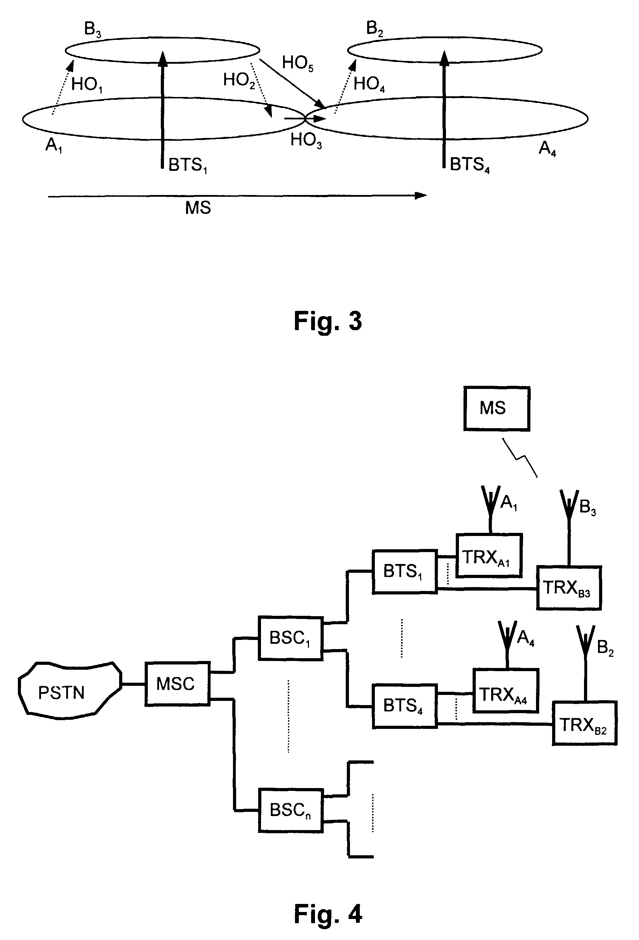

Fig. 3 illustrates handovers $HO_1$ to $HO_4$ executed for a moving mobile station MS, moving by way of example from cell $A_1$ to cell $A_3$, as located and shown in Fig. 1.

Fig. 4 is a schematic diagram of an exemplary GSM cellular radio network. A mobile switching centre MSC controls base station controllers BSC which control base transceiver stations BTS which operate different transmitter/ receivers TRX for the different frequencies used in the cellular radio network for setting up radio channels with mobile stations MS. To allow connections to wired telephones the mobile switching centre MSC is coupled to a public switched telephone network PSTN. Depart form the cellular network shown in Fig. 4 an other structure is possible.

When for mobile station MS, which is moving within cell $A_1$ as assumed, a call is set up first, always a carrier of zone $A_1$ is used, because this is the only way to secure availability for the establishment of the call as only the carriers of zone $A_1$ cover the complete cell. For this reason messaging channels, e. g. the Broadcast Control CHannel (BCCH), are always assigned to frequencies of the outermost zone of every cell. For the example shown, base station controller $BSC_1$ uses transmitter/receiver $TRX_{A1}$ of base transceiver station $BTS_1$ to set up the call with the mobile station MS with a carrier of zone $A_1$. When the mobile station enters zone $B_3$ the base station controller $BCS_1$ executes a handover $HO_1$ of the call to the transmitter/receiver $TRX_{B3}$ being a carrier of zone $B_3$. When the mobile station MS moves along the line shown in Fig. 3 and comes close to the border of zone $B_3$ an other handover $HO_2$ is initiated by base station controller $BSC_1$ back to a carrier of zone $A_1$. When the mobile station MS reaches the border of zone respectively cell $A_1$ a handover $HO_3$ to base transceiver station $BTS_4$ is executed by base station controller $BSC_1$ to the a carrier of zone $A_4$ of transmitter/receiver $TRX_{A4}$ serving zone $A_4$. Instead of initiating handovers $HO_2$ and $HO_3$ to hand over the call form the area of $BTS_1$ to the area of $BTS_4$ it is also possible to directly hand over the call form the carrier of zone $B_3$ to a carrier of zone $A_4$ with handover $HO_5$ as also shown. Handovers like handover $HO_3$ or $HO_5$ from within the area of one cell $A_1$ to the area of an other cell $A_4$ are handled like a call set up and are always bound to a carrier serving the complete cell (here carrier $A_4$) to which the call has to be handed over. After moving further and entering into zone $B_2$ an other handover $HO_4$ is executed by base station controller $BSC_1$ to a carrier of zone $B_2$ of transmitter/receiver $TRX_{B2}$, which is operated by base transceiver station $BTS_4$.

As known from GSM cellular radio networks handovers also can be managed by different base station controllers if base transceiver stations coupled to different base station controllers are involved in a handover. It is an other possibility that the mobile switching centre is managing the handover. It also should be understood that even though explained above only with one carrier for each zone several carriers can be used for each zone. It also should be understood that more than two different zones can be present per cell. In that case it is possible that handovers are effected skipping one ore more zones, e. g. with regard to Fig. 2 a handover from zone B to zone D or vice versa, i. e. handovers form one zone to an other zone having a distance greater one zone. This also includes handovers to other cells as explained above for handover $HO_5$ of Fig. 1.

In a cellular radio network according to the GSM-Standard several kinds of handovers are used. There is an inter-cell handover, an intra-cell handover and an inter-zone handover. The inter-cell handover is used if a mobile station MS changes from one cell to an other, e. g. as depicted in Fig. 3 form cell $A_1$ to cell $A_4$ and referenced as handover $HO_3$. Intra-cell handovers are normally used in cells not being divided into different zones. The intra-cell handover is executed, if the reception of a carrier has deteriorated. In that case a call is handed over to an other carrier of that cell or at least to an other timeslot of the same carrier, if other carriers are not available. The above specified handovers per se are well known, e. g. from the referenced state of the art, and will not be explained in detail. For the understanding of this invention the inter-zone handover, which is used, as explained above with reference to Fig. 3, to hand over a call from one zone to an other zone within a cell, e. g. handovers $HO_1$ or $HO_2$, are of importance and will be explained following in greater detail.

For initiating inter-zone handovers two different criteria are used by the base station controller according to this invention. To initiate an inter-zone handover from an outer zone to a more inner zone, e. g. handover $HO_1$ of Fig. 3, a carrier to interference criterion (C/I-handover) is used. For a inter-zone handover from an inner zone to a more outer zone, e. g. handover $HO_2$ of Fig. 3, a quality criterion (QUAL-handover) is used.

The C/I-handover is important in finding the most suitable zone for the mobile station and to hand it over to this zone while moving during a call from an outer zone to an more inner zone. The criterion for the C/I-handover is the ratio of the carrier signal level of the target frequency to the interference level. The mobile station has to be allocated to the carrier or zone which is the most inner zone that provides an adequate C/I ratio.

In a cellular radio network according to the GSM standard this ratios are not easily determinable as level measurements are only provided by the mobile station and sent to the base station controller for the BCCH carrier. The BCCH carrier, however, is assigned to the outermost zone. Therefore measured levels for the BCCH carrier have to be corrected by the allowable maximum transmission power of the target frequency. The BCCH level is measured by the mobile station for all cells which use the same frequencies or carriers on the same zone and is reported to the base station controller. The information where the same frequencies are used can be stored in a list of neighbouring cells for all zones (NC_LIST(z)) which can be stored in the base station controllers. The serving base station controller provides the respective list to active mobile stations. As the measurement abilities of the mobile station are limited, according to the GSM-System a maximum number of 32 neighbouring frequencies can be measured. A target frequency can be evaluated by using the following equation:

$$(1) \qquad AV\_RXLEV\_SCELL -max\{AV\_RXLEV\_NCELL(i), i \in NC\_LIST(z)\} > CIR(z)$$

Where AV_RXLEV_SCELL is the averaged signal level of the serving cell or carrier for an inter-zone handover. This value is generated by averaging the receive level values RXLEV of the BCCH carrier corrected by the difference between the allowable maximum transmitter power and the transmitter power currently used in the base transceiver station (BS_TXPWR). Thus the receive level of the serving cell is RXLEV_SCELL = RXLEV - (maximum BS_TXPWR - current BS_TXPWR).

AV_RXLEV_NCELL(i) is the averaged signal level of the neighbour cell BCCH carrier for an inter-zone handover, calculated for all cells i included in the NC_LIST(z) of the respective zone.

And CIR(z) is a C/I-handover criterion for the target carrier or zone z. CIR(z) is set to a meaningful value during the design of the cellular radio network.

With equation (1) the most suitable zone for the call is determined. If there are more zones fulfilling equation (1) the most suitable zone for the call is the most inner zone which fulfils the C/I criterion CIR(z).

As the number of measurements for neighbouring cells may be limited due to system performance reasons a mechanism has to be made available to provide default values if measurements are not possible. For zones for which no measurements are available the minimum value of all neighbour cell measurements is used to make an assumption for the RXLEV value for the respective zone.

The QUAL-handover is important in handing over the mobile station from an inner zone to a more outer zone during a call. The QUAL-handover is used only within a cell, i. e. it is not used for handing over a call being served by the outermost zone to an other cell, because, as explained above, calls of the outermost zone are handed over to an other cell by inter-cell handovers. The purpose of inner zones is to provide additional traffic capacity to the cellular radio network and to keep the outermost zone free for arriving mobile stations, i. e. inter-cell handovers, or for call set-ups, as only the outermost zone provides the BCCH. To use inner zones as long as possible a handover from an inner zone to a more outer zone is based on a quality criterion. For that reason the quality of the call is monitored in the base station controller and the mobile station which reports the results to the base station controller. In that way the quality of the up-link and the quality of the down-link of a call are available at the base station controller. The mobile station is directed by the base station controller to leave a respective zone and is allocated to a more outer zone if the quality of the call becomes unacceptable. The initiation of an inter-zone handover from an inner to a more outer zone is started if following equation is fulfilled:

$$(2) \qquad AV\_RXQUAL\_XX > L\_RXQUAL\_XX\_IZH$$

Where AV_RXQUAL_XX is the averaged quality for up-link or down-link, and L_RXQUAL_XX_IZH is the lower threshold criterion for inter-zone handover regarding up-link or down-link. With XX standing for up-link or down-link, and the quality being coded in accordance with the GSM-System from 1 to 7, with 1 being the highest quality.

For a cellular radio network having cells with concentric zones it is important to avoid the execution of unnecessary inter-zone handovers. It is in particular important to avoid inter-zone handovers to small inner zones for fast moving mobile stations. For this purpose a first timer is used to determine the speed of a mobile station and to hold the execution of a inter-zone handover to a inner zone if the mobile station is determined to be fast moving. The first timer is started each time a mobile station is assigned to a cell, i. e. if a call is set up. It is also started if a mobile station is handed over to a cell by a inter-cell handover. The first timer however is not used for the outermost zone, because this zone provides seamless coverage.

As mentioned above, one of the formerly known handovers, the intra-cell handover, also is used for handovers within one cell. To avoid ping-pong effects between the intra-cell handover and the inter-zone handovers, as explained above, a second timer is used. The second timer is implemented for each frequency or carrier of a cell. If for a call assigned to a certain frequency an intra-cell handover is executed, the second timer is started for that certain frequency. As long as the second timer for the certain frequency is running, that certain frequency is excluded as a target frequency for inter-zone or intra-cell handovers.

To further improve the inventive cellular radio network having concentric zones, the searching algorithm for intra-cell handovers should be changed. Within all channels having the same interference level the algorithm starts in the serving zone. Within the serving zone first an other frequency is chosen. If no other frequency is available an other timeslot of the serving frequency is used. If neither an other frequency nor an other timeslot of the serving frequency is available in the serving zone the next outer zone is evaluated.

To avoid conflicting situations for the different kinds of handovers, as explained above, the handovers are executed according to the following order: firstly, inter-cell handovers, secondly, C/I inter-zone handovers, thirdly, QUAL-inter-zone handovers and lastly, intra-cell handover.

**Claims**

1.  Method for increasing the capacity of a cellular radio network with cells being partitioned in zones having at least one frequency or carrier allocated to each zone, by a inter-zone handover for handing over a call whereat

    said inter-zone handover from an outer zone to a more inner zone is executed after a carrier to interference criterion for at least one of the carriers of said more inner zone is fulfilled, and
    said inter-zone handover from an inner zone to a more outer zone is executed after a quality criterion for the call is no longer fulfilled.

2.  Method according to claim 1,
    **characterised in,**
    that said inter-zone handover hands over a call from a zone to an other zone skipping at least one zone.

3.  Method according to claim 1 or 2,
    **characterised in,**
    that a call set-up always is allocated to a carrier of the outermost zone of a cell.

4.  Method according to a claim 1 to 3,
    **characterised in,**
    that a inter-cell handover always is allocated to a carrier of the outermost zone of a cell.

5.  Method according to a claim 1 to 4,
    **characterised in,**
    that the speed of a calling mobile station is determined and that for mobile stations having a too high speed said inter-zone handover to a inner zone is not executed.

6.  Method according to claim 5,
    **characterised in,**
    that for each zone a threshold for the speed of the mobile station is defined.

7.  Cellular radio network having increased capacity with cells being partitioned in zones having at least one frequency or carrier allocated to each zone, with means for executing an inter-zone handover algorithm, whereat

    said means for executing said inter-zone handover algorithm executes said inter-zone handover from an outer zone to a more inner zone after measuring a sufficiently good carrier to interference ratio for at least one of the carriers of said more inner zone, and
    said means for executing said inter-zone handover algorithm executes said inter-zone handover from an inner zone to a more outer zone after a quality measurement for an active call shows an insufficient result.

8.  Cellular radio network according to claim 7,
    **characterised in,**

that said means for executing said inter-zone handover algorithm hands over a call from a zone to an other zone skipping at least one zone.

9. Cellular radio network according to claim 7 or 8,
   **characterised in,**
   that a call set-up always is allocated to a carrier of the outermost zone of a cell.

10. Cellular radio network according to a claim 7 to 9,
    **characterised in,**
    that a inter-cell handover always is allocated to a carrier of the outermost zone of a cell.

11. Cellular radio network according to a claim 7 to 10,
    **characterised in,**
    that said means for executing said inter-zone handover algorithm determines the speed of a calling mobile station and that said means for executing said inter-zone handover algorithm refrains from executing a inter-zone handover to a inner zone for mobile stations having a too high speed.

12. Cellular radio network according to claim 11,
    **characterised in,**
    that for each zone a threshold for the speed of the mobile station is defined and stored in said means for executing said inter-zone handover algorithm.

13. Cellular radio network according to a claim 7 to 12,
    **characterised in,**
    that the cellular radio network is a GSM-system.

**Fig. 1**

**Fig. 2**

**Fig. 3**

**Fig. 4**

# EP 0 986 278 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 97 14260 A (NOKIA TELECOMMUNICATIONS OY ;AALTO RISTO (FI)) 17 April 1997 | 1-4,7-9, 13 | H04Q7/38 H04Q7/22 |
| Y | * page 3, line 29 - page 4, line 9 * | 5,6,11, 12 | |
| | * page 4, line 30 - page 5, line 30 * * page 6, line 18 - line 28 * * page 10, line 15 - page 11, line 28 * * page 13, line 25 - page 14, line 30 * * page 21, line 12 - line 30 * * page 23, line 13 - line 15 *<br>--- | | |
| Y | EP 0 844 798 A (SIEMENS AG) 27 May 1998 | 5,6,11, 12 | |
| | * column 2, line 30 - line 45 * * column 3, line 25 - column 4, line 3 * * column 8, line 25 - line 37 *<br>----- | | |

| | | | TECHNICAL FIELDS SEARCHED (Int.Cl.6) |
|---|---|---|---|
| | | | H04Q |

The present search report has been drawn up for all claims

| Place of search | Date of completion of the search | Examiner |
|---|---|---|
| THE HAGUE | 11 February 1999 | Gerling, J.C.J. |

EPO FORM 1503 03.82 (P04C01)

10

**ANNEX TO THE EUROPEAN SEARCH REPORT
ON EUROPEAN PATENT APPLICATION NO.**             EP 98 30 7489

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-1999

| Patent document cited in search report | | Publication date | Patent family member(s) | | Publication date |
|---|---|---|---|---|---|
| WO 9714260 | A | 17-04-1997 | FI | 954879 A | 14-04-1997 |
| | | | AU | 7218796 A | 30-04-1997 |
| | | | CA | 2205806 A | 17-04-1997 |
| | | | CN | 1166260 A | 26-11-1997 |
| | | | CZ | 9701794 A | 17-12-1997 |
| | | | EP | 0801877 A | 22-10-1997 |
| | | | HU | 9801559 A | 28-10-1998 |
| | | | JP | 10511254 T | 27-10-1998 |
| | | | NO | 972708 A | 12-08-1997 |
| | | | NZ | 319627 A | 25-11-1998 |
| | | | PL | 320643 A | 13-10-1997 |
| EP 0844798 | A | 27-05-1998 | NONE | | |

EPO FORM P0459

For more details about this annex : see Official Journal of the European Patent Office, No. 12/82